# EUROPEAN PATENT APPLICATION

(11) **EP 1 998 077 A2**
(43) Date of publication of application: **03.12.2008**
(21) Application number: 08009731.4
(22) Date of filing: 28.05.2008
(51) Int. Cl.: F16G 5/18

(54) **Power transmitting chain and power transmitting apparatus having the same**

(30) Priority: 01.06.2007 JP 2007147289
(71) Applicant: JTEKT Corporation, Osaka-shi Osaka 542-8502 (JP)
(72) Inventor: Yasuhara, Shinji, Osaka-shi Osaka 542-8502 (JP)
(74) Representative: Hager, Thomas Johannes

(57) **Abstract**

A first pin (3) of a connecting member (50) of connecting a plurality of links (2) to each other includes a front portion (12) opposed to a corresponding second pin (4). The front portion (12) is brought into rolling and sliding contact with the corresponding second pin (4) at a contact portion (T1) displaced in accordance with a vibration in a bending angle between the links (2). A locus of moving the contact portion in accordance with bending the link (2) forms an involute curve INV. A contact region of an end face (17) of the first pin (3) is brought into contact with a sheave face of a pulley by constituting a center by a contact center point. With regard to an orthogonal direction (V), a distance between a contact center point and a contact portion when the bending angle is zero and a distance between the contact center point and a contact portion when the bending angle is an allowable maximum bending angle are equal to each other.

## Description

### BACKGROUND OF THE INVENTION

### 1. Field of the Invention

The present invention relates to a power transmitting chain and a power transmitting apparatus having the same.

### 2. Related Art

There is a power transmitting chain in an endless shape used in a power transmitting apparatus of a pulley type continuously variable transmission (CVT) or the like of an automobile in which links are connected by a first and a second pin (refer to, for example, JP-A-2006-226405).

According to JP-A-2006-226405, a contact ellipse formed at an end face of the first pin is engaged with a sheave face of a pulley to be able to transmit a power. Further, the first and the second pins are brought into contact with each other at contact portions thereof. The contact portion is displaced in accordance with bending between the links and a locus of moving the contact portion is made to draw an involute curve.

### SUMMARY OF THE INVENTION

In such a power transmitting chain, it is requested to further promote durability. It is an object of the invention to resolve the problem.

The inventors have acquired a knowledge that a positional relationship between a center point of the contact ellipse and the contact portion relates to a durability of the link as a result of an intensive research. Specifically, in a linear region of extending the chain straight, the contact portion is arranged to be offset to a side of a chain inner diameter. As a result thereof, with regard to the chain diameter direction, a distance between the contact portion of the first pin operated with an external force and the center point of the contact ellipse becomes long, and a large moment is produced at the first power transmitting member by the external force operated to the contact portion and the contact center point. The moment is operated as a large load to the chain inner diameter side portion of the link and a stress of the chain inner diameter side portion becomes high.

On the other hand, in a maximum bending region of bending the chain the most, the contact portion is disposed at a vicinity of the center portion in the chain diameter direction. As a result thereof, with regard to the chain diameter direction, a distance between the contact portion of the first pin operated with the external force and the center point of the contact ellipse becomes short and the moment of the first pin caused by the external force operated to the contact portion and the contact center point is small. Since the moment is small, the load (stress) on the chain inner diameter side portion of the link becomes small.

As described above, a stress variation of a portion of the link on the chain inner diameter side in accordance with bending the chain is large. A reduction in the stress variation of the link amounts to promotion of the durability of the link, and therefore, amounts to promotion of the durability of the power transmitting chain.

The invention carried out based on the knowledge provides a power transmitting chain (2) comprising: a plurality of links (2) aligned in a chain advancing direction (X) and a plurality of connecting members (50) extended in a chain width direction (W) orthogonal to the chain advancing direction for connecting the links to each other, wherein each of the connecting members includes a first power transmitting member (3) and a second power transmitting member (4), the first power transmitting member of each of the connecting members includes an opposed portion (12) opposed to the corresponding second power transmitting member, the opposed portion is brought into rolling and sliding contact with the corresponding second power transmitting member at a contact portion (T) displaced in accordance with a variation in a bending angle (θ) between the links, a locus of moving the contact portion in accordance with bending between the links forms an involute curve (INV), an end face (17) of the first power transmitting member is formed with a contact region (19) brought into contact with a sheave face (62a, 63a, 72a, 73a) of a pulley (60, 70), the contact region includes a contact center point(F), with regard to an orthogonal direction (V) orthogonal to both of the chain advancing direction and a chain width direction, a distance (J1) between the contact center point and a contact portion (T1) when the bending angle is zero and a distance (J2) between the contact center point and a contact portion (T2) when the bending angle is an allowable maximum bending angle (θmax) are equal to each other.

Further, an alphanumeric character in parentheses designates a corresponding constituent element or the like in an embodiment mentioned later. The same is as follows.

According to the invention, with regard to moments of the first power transmitting member produced by an external force operated from the corresponding second power transmitting member to the contact portion and an external force operated from each of the pulleys to the contact center point, values thereof can be made to be the same as each other and directions thereof can be made to be reverse to each other when the bending angle is zero and when the bending angle is the allowable maximum bending angle. Thereby, when the bending angle is varied from zero to the allowable maximum bending angle, a width of varying a stress at a portion on one side in the orthogonal direction of the link corresponding to a chain outer diameter side portion and a width of varying a stress of a portion on other side in the orthogonal direction of the link corresponding to the chain inner diameter side portion can be made to be equal to each other. As a result of enabling to make the widths of varying the stresses of the portion on one side and the portion on other side of the link with regard to the orthogonal direction uniform, it can be prevented that the width of varying the stress of either one of the portion on one side and the portion on other side become large. The width of varying the stress of the link can be made to be small, and therefore, a load of the link can be reduced, and the durability of the power transmitting chain can be promoted by promoting the durability of the link.

Further, according to the invention, there is a case in which the contact center point is arranged at a center position (K) of the link with regard to the orthogonal direction. In this case, a load operated from the first power transmitting member to one side in the orthogonal direction of the link and a load operated to other side in the orthogonal direction of the link therefrom can be made to be further uniform. Thereby, the stress of the link can be dispersed further uniformly and the load of the link can be reduced.

Further, according to the invention, there is a case in which in view from the chain width direction, the contact center point of the contact region of the first power transmitting member is arranged to coincide with a graphic center (G) of an end face of the first power transmitting member. In this case, in view from the chain width direction, the stress of the power transmitting member produced by being caused by the load from the pulley can be distributed evenly to a total of the first power transmitting member.

Further, according to the invention, there is a case in which the link includes a first and a second through hole (9, 10) arranged to be aligned in the chain advancing direction and respectively inserted with the corresponding connecting members, the first through hole is fitted with the corresponding first power transmitting member to be able to move relative to each other and press-fitted to be fixed with the corresponding power transmitting member, and the second through hole is press-fitted to be fixed with the corresponding first power transmitting member and fitted with the corresponding second power transmitting member to be able to move relative to each other.

In this case, when the contact region of the first power transmitting member is successively engaged with the pulleys, the links are flexed while the corresponding second power transmitting member is brought into rolling and sliding contact with the first power transmitting member. At this occasion, between the first and the second power transmitting members opposed to each other, a rolling contact component therebetween is large and a sliding contact component is extremely small. As a result, the contact region of the first power transmitting member is brought into contact with the respective pulleys without being rotated hardly and a high transmission efficiency can be ensured by reducing a friction loss.

Further, according to the invention, there is a case of including a first and a second pulley respectively having pairs of sheave faces in a shape of a face of a circular cone opposed to each other and the above-descried power transmitting chain extended around the pulleys and engaged with the sheave faces for transmitting a power. In this case, a power transmitting apparatus excellent in a durability can be realized.

### BRIEF DESCRIPTION OF THE DRAWINGS

Fig.1 is a perspective view schematically showing a constitution of an essential portion of a continuously variable transmission as a power transmitting apparatus including a power transmitting chain according to an embodiment of the invention.
Fig.2 is a partial enlarged sectional view of a drive pulley (driven pulley) and the chain of Fig.1.
Fig.3 is a cross-sectional view of an essential portion of the chain.
Fig.4 is a partial vertical sectional view of an essential portion of the chain, showing a linear region of the chain.
Fig.5 is a partial enlarged view of Fig.4.
Fig. 6 is a side view of a bending region of the chain, showing a state in which a bending angle of the chain is a maximum allowable bending angle.
Fig.7 is a partial sectional view of an essential portion of a chain of a background art.
Fig.8A is a schematic graph showing a relationship between stresses produced at respective portions and the bending angle of a link of a chain according to an embodiment of the invention, and Fig. 8B is a schematic graph showing a relationship between stresses produced at respective portions and a bending angle of a link of a chain of a background art.

### DETAILED DESCRIPTION OF THE PREFERRED EMBODIMENTS

A preferable embodiment of the invention will be explained in reference to the attached drawings.

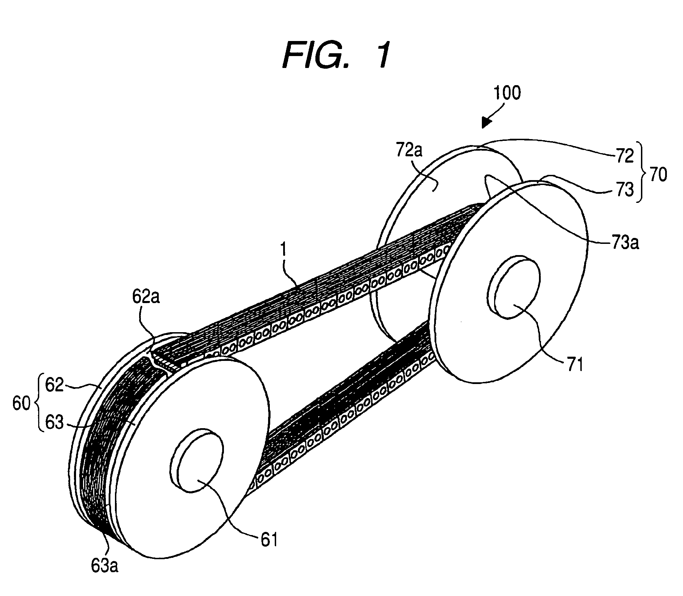

Fig.1 is a perspective view schematically showing a constitution of an essential portion of a chain type continuously variable transmission (hereinafter, also referred to simply as continuously variable transmission) as a power transmitting apparatus having a power transmitting chain according to an embodiment of the invention. In reference to Fig.1, a continuously variable transmission 100 is mounted to a vehicle of an automobile or the like and includes a drive pulley 60 made of a metal (structural steel or the like) constituting a first pulley, a driven pulley 70 made of a metal (structural steel or the like) constituting a second pulley, and a power transmitting chain 1 (hereinafter, also simply referred to as chain) in an endless shape extended between the two pulleys 60 and 70. Further, the chain 1 in Fig.1 shows a partial section to facilitate understanding.

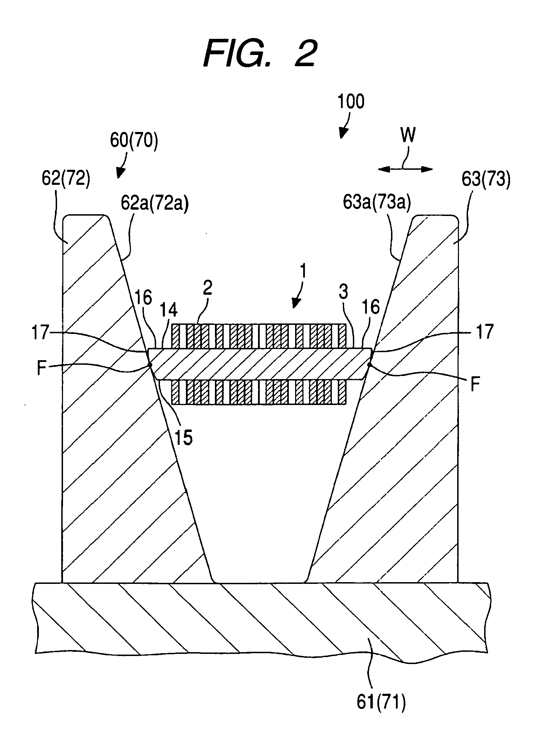

Fig. 2 is a partial enlarged sectional view of the drive pulley 60 (driven pulley 70) and the chain 1 of Fig.1. In reference to Fig.1 and Fig.2, the drive pulley 60 is attached to an input shaft 61 connected to a drive source of the vehicle to be able to transmit the power and includes a fixed sheave 62 and a movable sheave 63. The fixed sheave 62 and the movable sheave 63 respectively include a pair of sheave faces 62a and 63a opposed to each other. The sheave faces 62a and 63a include inclined faces in a shape of a conical face.

Further, the movable sheave 63 is connected with a hydraulic actuator (not illustrated) for changing a groove width, and the groove width is changed by moving the movable sheave 63 in an axial direction (left and right direction of Fig.2) of the input shaft 61. Thereby, a hanging radius (effective radius) of the pulley 60 with regard to the chain 1 is made to be able to be changed by moving the chain 1 in a diameter direction (up and down direction of Fig. 2) of the input shaft 61.

On the other hand, as shown by Fig.1 and Fig.2, the driven pulley 70 is attached to an output shaft 71 connected to a drive wheel (not illustrated) to be able to transmit the power to be able to rotate integrally therewith, and includes a fixed sheave 73 and a movable sheave 72 respectively having a pair of sheave faces 73a and 72a opposed to each other to form a groove for squeezing the chain 1 by a strong pressure similar to the drive pulley 60.

The movable sheave 72 of the drive pulley 70 is connected with a hydraulic actuator (not illustrated) similar to the movable shave 63 of the drive pulley 60, and the groove width is changed by moving the movable sheave 72 in changing a speed. Thereby, a hanging radius of the pulley 70 with regard to the chain 1 is made to be able to be changed by moving the chain 1.

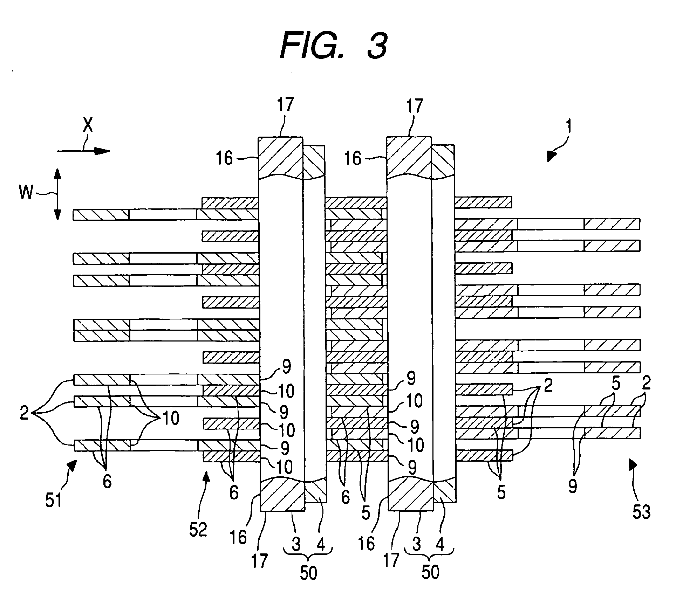

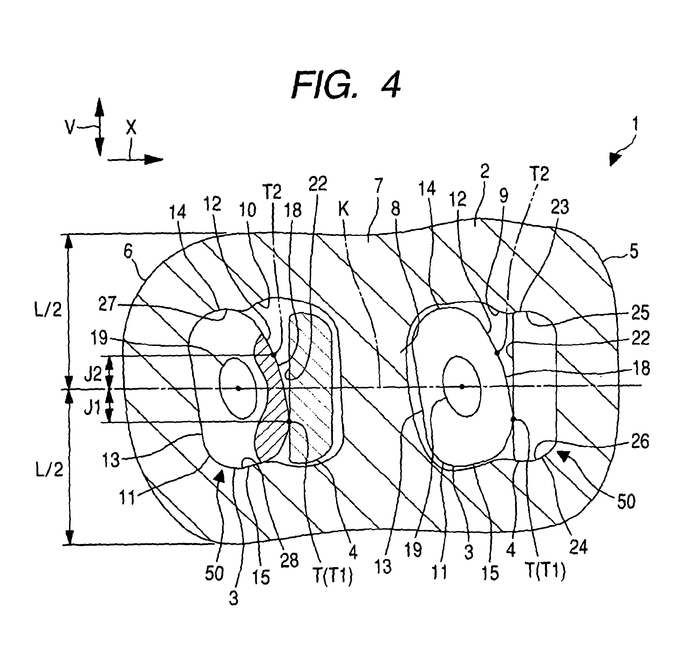

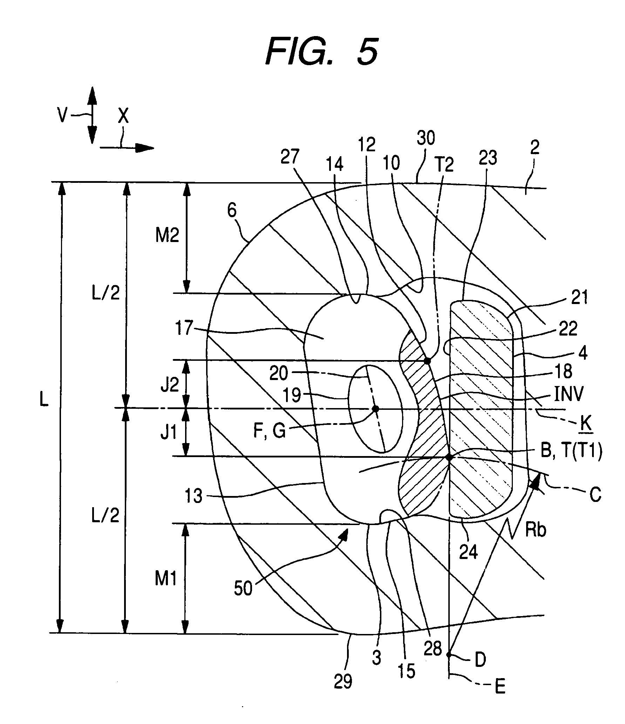

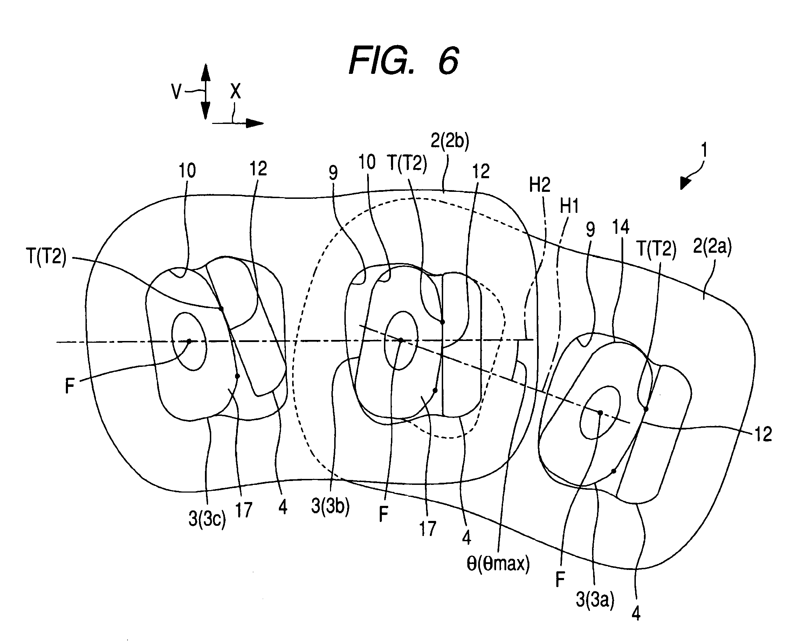

Fig.3 is a cross-sectional view of an essential portion of the chain 1. Fig.4 is a partial vertical sectional view of an essential portion of the chain 1, showing a linear region of the chain 1. Fig. 5 is a partial enlarged view of Fig.4. Fig. 6 is a side view of a bending region of the chain 1, showing a state when an angle θ of bending the chain 1 by an allowable maximum bending angle θmax.

In reference to Fig.3 and Fig.4, the chain 1 includes a plurality of links 2 and a plurality of connecting members 50 for connecting the links 2 to each other.

In the following, a direction of parallel with a direction of advancing the chain 1 is referred to as a chain advancing direction X, a direction in parallel with a chain width direction orthogonal to the chain advancing direction X is referred to as a chain width direction W, and a direction orthogonal to both of the chain advancing direction X and the chain width direction W is referred to as an orthogonal direction V.

Each link 2 is formed by a plate-like shape and includes a front end portion 5 and a rear end portion 6 as pair of end portions on aligned front and rear sides in the chain advancing direction X, and a middle portion 7 arranged between the front end portion 5 and the rear end portion 6.

The front end portion 5 and the rear end portion 6 are respectively formed with a front through hole 9 as a first through hole and a rear through hole 10 as a second through hole. The middle portion 7 includes a pillar portion 8 for partitioning an interval between the front through hole 9 and the rear through hole 10. The pillar portion 8 is provided with a predetermined thickness in the chain advancing direction X. Further, a peripheral edge portion of each link 2 is formed by a smooth curve to constitute a shape by which a stress concentration is difficult to be brought about.

A plurality of link rows 51, 52, 53, ... are formed by using the links 2. The respective links rows 51, 52, 53, ... respectively include pluralities of the links 2 aligned in the chain width direction W. The respective links 2 of the same link row are aligned such that positions thereof in the chain advancing direction X are the same as each other. The respective link rows 51, 52, 53, ... are arranged to be aligned along the chain advancing direction X.

The chain 1 constituting the endless shape is formed by connecting the links 2 of the link rows contiguous to each other in the chain advancing direction X by the corresponding connecting members 50.

Specifically, the front through hole 9 of the link 2 of the first link row 51 and the rear through hole 10 of the link 2 of the second row 52 are aligned in the chain width direction W to correspond to each other and the links 2 of the first and the second rows 51 and 52 are connected by the connecting members 50 inserted into the through holes 9 and 10 thereof.

In this way, the front through hole 9 of the link 2 of one link row and the rear through hole 10 of the link 2 of other link row disposed on a front side of the one link row in the chain advancing direction X are aligned in the chain width direction W to correspond to each other, and the links 2 of the link rows corresponding to each other are connected by the connecting members 50 inserted to the through holes 9 and 10.

Each connecting member 50 includes a first and a second pin 3 and 4 constituting shapes symmetrical in the chain width direction W and constituting a pair.

The first and the second pins 3 and 4 are respectively long members extended in the chain width direction W formed by using bearing steel of, for example, SUJ 2 material or the like of JIS (Japanese Industrial Standards).

In reference to Fig.4, the first pin 3 is also referred to as the drive pin constituting the first power transmitting member. A peripheral face 11 of the first pin 3 includes a front portion 12 as an opposed portion directed to a front side in the chain advancing direction X, a rear portion 13 directed to a rear side in the chain advancing direction X, and one end portion 14 and other end portion 15 as a pair of end portions opposed to each other in the orthogonal direction W.

The one end portion 14 is disposed on one side (outer diameter side of chain 1) in the orthogonal direction V relatively, and the other end portion 15 is disposed on other side (inner diameter side of chain 1) in the orthogonal direction V relatively. The front portion 12 is opposed to the corresponding second pin 4, and includes a change rate increasing portion 18. In the first pin 3, the change rate increasing portion 18 is a contact portion T displaced in accordance with a variation in a bending angle between the links 2 to be brought into rolling and sliding contact with a rear portion 22, mentioned later, of the corresponding second pin 4.

Further, the rolling and sliding contact refers to contact including at least one of the rolling contact and the sliding contact.

In reference to Fig.5, a section of the change rate increasing portion 18 is constituted by an involute curve INV. A start point B of the involute curve INV coincides with a contact portion T1 of the first and the second pins 3 and 4 in the linear region of the chain 1. The contact portion T1 is a contact portion when the bending angle is zero. The start point B is disposed on a side of the other end portion 15 of the one end portion 14 and the other end portion 15 of the front portion 12.

The involute curve INV is based on a predetermined base circle C. The base circle C is a circle having a center D and a radius Rb.

In the region of bending the chain 1, the center D is disposed on a plane E orthogonal to the chain advancing direction X and including the contact portion T1 of the first pin 3, and disposed on one side in the orthogonal direction V relative to the contact portion T1. The start point B is arranged on the base circle C.

The involute curve INV is extended from the start point B to the one side in the orthogonal direction V. A radius of curvature of the involute curve INV is increased as proceeding to the one end side in the orthogonal direction V of the involute curve. Thereby, a change rate of a displacing amount of the contact portion T is increased in accordance with an increase in the bending angle between the links 2.

By the above-described constitution, in view from the chain width direction W, a locus of moving the contact point T in accordance with bending the corresponding links 2 forms the involute curve INV by constituting a reference by the first pin 3.

In reference to Fig.2, a pair of end portions 16 of the first pin 3 are respectively provided with end faces 17. The end faces 17 are engaged with the corresponding receive faces 62a, 63a, 72a; 73a of the respective pulleys 60 and 70 to be able to transmit a power by way of thin lubricant films. In this way, the end face 17 of the first pin 3 contributes to a direct power transmission, and therefore, the first pin 3 is formed by a material excellent in high strength and wear resistance of bearing steel or the like mentioned above.

The end face 17 of the first pin 3 is formed by a shape including a portion of a spherical face and bent to be concave to an outer side of the chain width direction. The one end portion 14 of the first pin 3 is projected to an outer side in the chain width direction W more than the other end portion 15.

In reference to Fig.2 and Fig. 5, the end face 17 is provided with a contact region 19. The contact region 19 of the end faces 17 are engaged with the corresponding sheave faces 62a, 63a, 72a, 73a of the respective pulleys 60 and 70 to be able to transmit a power by way of thin lubricant films.

The contact region 19 constitutes, for example, a shape of an ellipse and a center of the ellipse constitutes a contact center point F. In view from the chain width direction W, the contact center point F is arranged to coincide with a graphic center G of the end face. 17 of the first pin 3 forming the contact region 19. A long axis 20 of the contact region 19 is in parallel with the rear portion 13 of the first pin 3 constituted by a flat face.

Further, "the contact center point F coincides with the graphic center G of the end face 17" mentioned above signifies that. the both substantially coincide with each other, and includes a case in which the both are shifted from each other within, for example, a range of a fabrication error.

The second pin 4 is also referred to as a lock pin, a strip, or an interpiece and constitutes a second power transmitting member. The second pin 4 is formed to be shorter than the first pin 3 so as not to be brought into contact with the sheave faces of the respective pulleys. With regard to the chain advancing direction X, the second pin 4 is arranged on the front side of the first pin 3 constituting the pair and formed to be more thin-walled than the first pin 3.

A peripheral face 21 of the second pin 4 includes a rear portion 22 directed to a rear side in the chain advancing direction X, and one end portion 23 and the other end portion 24 constituting a pair of end portions. The rear portion 22 is formed into a flat face orthogonal to the chain advancing direction X and constitutes an opposed portion opposed to the front portion 12 of the corresponding first pin 3.

The one end portion 23 is disposed on one side in the orthogonal direction V relatively and the other end portion 24 is disposed on the other side in the orthogonal direction V relatively.

In reference to Fig.4, the chain 1 is constituted as a so-to-speak press-fitting type chain. Specifically, the front through hole 9 of each link 2 is fitted with the corresponding first pin 3 loosely to be able to move relative to each other and press-fitted to be fixed with the corresponding second pin 4. Further, the rear through hole of each link 2 is press-fitted to be fixed with the corresponding first pin 3 and loosely fitted with the corresponding second pin 4 to be able to move relative to each other.

A portion of the front through hole 9 opposed to the one end portion 23 of the corresponding second pin 4 is made to constitute an outer diameter side press-fitted portion 25 and the one end portion 23 is brought into press-contact with the outer diameter side press-fitted portion 25. A portion of the front through hole 9 opposed to the other end portion 24 of the corresponding second pin 4 is made to constitute an inner diameter side press-fitted portion 26 and the other end portion 15 is brought into press-contact with the inner diameter side press-fitted portion 26.

A portion of the rear through hole 10 opposed to the one end portion 14 of the corresponding first pin 3 is made to constitute an outer diameter side press-fitted portion 27 and the one end portion 14 is brought into press-contact with the outer diameter side press-fitted portion 27. A portion of the rear through hole 10 opposed to the other end portion 15 is made to constitute an inner diameter side press-fitted portion 28 and the other end portion 15 is brought into press-contact with the inner diameter side press-fitted portion 28.

In reference to Fig.6, the bending angle θ is defined as, for example, an angle made by a first plane H1 and a second plane H2.

The first plane H1 refers to a plane including the respective contact center points F of a pair of the first pins 3a, 3b respectively inserted to the respective through holes 9 and 10 of one link 2a and in parallel with the chain width direction W.

The second plane H2 refers to a plane including respective contact center points F of a pair of first pins 3b and 3c respectively inserted to the respective through holes 9 and 10 of other link 2b contiguous to the link 2a in the chain advancing direction X and in parallel with the chain width direction W.

A range in view of designing of the bending angle θ is set to, for example, 0° through 20°, a lower limit of the bending angle θ is 0 ° and the allowable maximum bending angle θmax becomes 20°. In Fig. 6, a state when the bending angle θ is the allowable maximum bending angle θmax is shown and the contact portion T at this occasion is shown as a contact portion T2. On the other hand, in Fig.4 and Fig.5, a state when the bending angle θ is 0° is shown.

In reference to Fig.5, the embodiment is characterized in that with regard to the orthogonal direction V, a distance J1 between the contact center point F of the contact region 19 and the contact point T1 when the bending angle θ is 0° (zero), and a distance J2 between the contact center point F and the contact portion T2 when the allowable maximum bending angle θmax are made to be equal to each other.

Further, as other characteristic of the embodiment, it can be pointed out that the contact center point F of the contact region 19 of the first pin 3 is arranged at a center position K of the link 2 with regard to the orthogonal direction V.

Specifically, with regard to the orthogonal direction V, a portion of the link 2 formed with the rear through hole 10 is made to be long the most and a length of the portion is made to constitute a length L (height) of the link 2. With regard to the orthogonal direction V, the contact center point F is arranged at a position advanced from an inner diameter side end portion 29 of the link 2 by 1/2 of the length L.

With regard to the orthogonal direction V, a length M1 from the inner diameter side end portion 29 of the link 2 to the inner diameter side press-fitted portion 28 of the rear through hole 10 and a length M2 from an outer diameter side end portion 30 of the link 2 to the outer diameter side press-fitted portion 27 of the rear through hole 10 are made to be substantially the same (M1 ≈ M2).

As explained above, according to the embodiment, with regard to the orthogonal direction V, the distance J1 between the contact center point F of the first pin 3 and the contact portion T1 when the bending angle θ is zero and the distance J2 between the contact center point F of the first pin 3 and the contact portion T2 when the bending angle θ is the allowable maximum bending angle θmax are made to be equal to each other.

Thereby, with regard to moments of the first pin 3 produced by an external force operated from the corresponding second pin 4 to the contact portion T of the first pin 3 and an external force operated from the pulley 60 or 70 to the contact center point F, values thereof can be made to be the same and directions thereof can be made to be reverse to each other when the bending angle θ is zero and when the bending angle θ is the allowable maximum bending angle θmax.

Thereby, when the bending angle θ is varied from zero to the allowable maximum bending angle θmax, a width of varying a stress of the outer diameter side press-fitted portion 27 of the rear through hole 10 of the link 2 and a width of varying a stress of the inner diameter side press-fitted portion 28 caused by the moments can be made to be equal to each other.

As a result of enabling to make the width of varying the stress of the outer diameter side press-fitted portion 27 of the rear through hole 10 of the link 2 and the width of varying the stress of the inner diameter side press-fitted portion 28 uniform, it can be prevented that the width of varying the stress of either one of the outer diameter side press-fitted portion 27 and the inner diameter side press-fitted portion 28 becomes large. The width of varying the stress of the link 2 can be made to be small, and therefore, a load of the link 2 can be reduced and a durability of the chain 1 can be promoted by promoting a durability of the link 2.

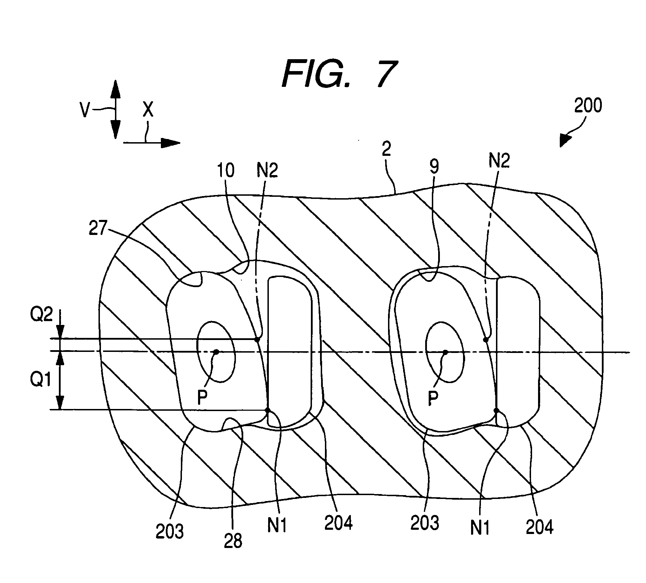

An advantage of the chain 1 according to the embodiment becomes clear by comparing with, for example, a chain 200 of a background art shown in Fig.7. Although the chain 200 includes a first and a second pin 203 and 204 similar to the first and the second pins 3 and 4, the first and the second pins 203 and 204 differ therefrom in the following point. That is, with regard to the orthogonal direction V, a distance Q1 between a contact center portion P and a contact portion N1 when the bending angle θ is zero is relatively long and a distance Q2 between the contact center point P and a contact portion N2 when the bending angle θ is the allowable maximum bending angle θmax is relatively short.

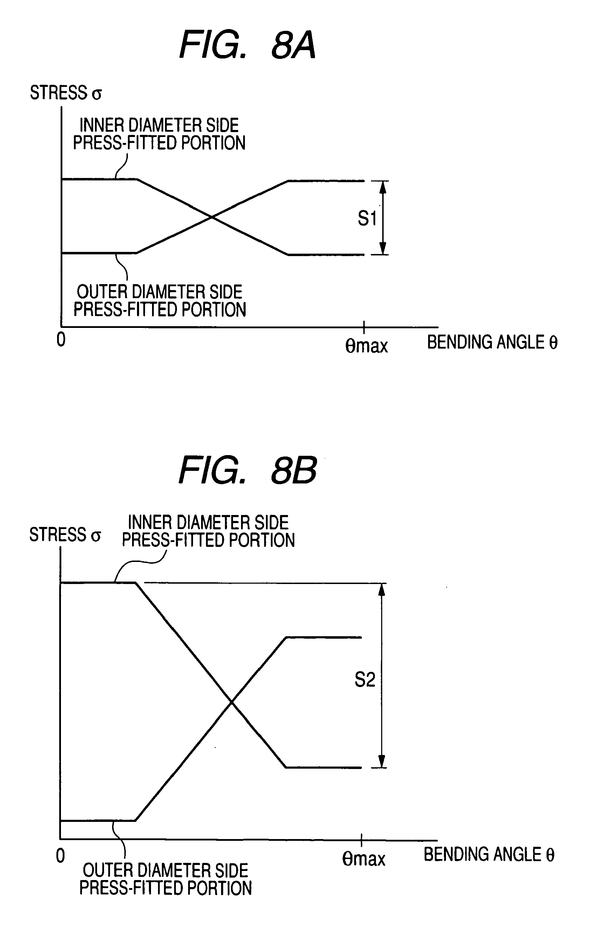

In the chain 200, when widths of varying stresses produced respectively at the outer diameter side press-fitted portion 27 and the inner diameter side press-fitted portion 28 of the rear through hole 10 of the link 2 and widths of varying stresses produced respectively at the outer diameter press-fitted portion 27 and the inner diameter press-fitted portion 28 of the rear through hole 10 of the chain 1 according to the embodiment are compared as shown by Figs.8A and 8B.

As shown by Fig. 8A, according to the chain 1 of the embodiment, a maximum value of a stress σ at the outer diameter side press-fitted portion 27 and a maximum value of the stress at the inner diameter side press-fitted portion 28 are substantially equal to each other, and a width S1 of respective stress variations of the outer diameter press-fitted portion 27 and the inner diameter press-fitted portion 28 is small. Therefore, the width of the stress variation of the link 2 is small.

In contrast thereto, as shown by Fig. 8B, according to the chain 200 of the background art, a maximum value of the stress σ at the inner diameter side press-fitted portion 28 is high, as a result, a width S2 of a stress variation of the inner diameter side press-fitted portion 28 is large. Therefore, a width of a stress variation of the link 2 is large.

In this way, it is known that the width of the stress variation of the link 2 of the chain 1 of the embodiment is made to be smaller and the durability is further promoted.

Further, the contact center point F of the first pin 3 is arranged at the center position K of the link 2 with regard to the orthogonal direction V. Thereby, a load operated from the first pin 3 to the outer diameter side press-fitted portion 27 of the rear through hole 10 of the link 2 and a load operated to the inner diameter side press-fitted portion 28 therefrom can be made to be further uniform. Thereby, the stress of the link 2 can be dispersed further uniformly and the load of the link 2 can be made to be low.

Further, in view from the chain width direction W, the contact center point F of the contact region 19 of the first pin 3 is arranged to coincide with the graphic center G of the end face 17 of the first pin 3. Thereby, in view from the chain width direction W, the stress of the first pin 3 produced by being caused by the load from each pulley 60 or 70 can be distributed evenly at a total of the first pin 3.

Further, the front through hole 9 is loosely fitted with the corresponding first pin 3 and press-fitted to be fixed with the corresponding second pin 4 and the rear through hole 10 of each link 2 is press-fitted to be fixed with the corresponding first pin 3 and loosely fitted with the corresponding second pin 4.

Thereby, when the contact region 19 of the first pin 3 is successively engaged with the respective pulleys 60 and 70, the link 2 is flexed while bringing the corresponding second pin 4 into rolling and sliding contact with the first pin 3. At that occasion, between the first and the second pins 3 and 4 opposed to each other, a rolling contact component between the link 2 is large and a sliding contact component thereof is extremely small.

As a result thereof, the contact region 19 of the first pin 3 is brought into contact with the respective pulleys 60 and 70 while being rotated hardly and a high transmission efficiency can be ensured by reducing a friction loss.

Further, by constituting a section of the change rate increasing portion 18 of the first pin 3 by the involute curve INV, a locus of moving the contact portion T of the first pin 3 in accordance with bending the link 2 can be constituted by the shape along the involute curve INV. As a result thereof, a vibration such as a vibration of a chord of the chain 1 caused by engaging the first pin 3 successively with the corresponding sheave faces 62a, 63a, 72a, 73a of the respective pulleys 60 and 70 can firmly be reduced.

As described above, the continuously variable transmission 100 excellent in the durability and the transmission efficiency and having a small vibration can be realized.

The invention is not limited to a content of the above-described embodiment but can variously be changed within the range described in the claims.

For example, the contact center point F of the first pin 3 may be arranged to be offset in the orthogonal direction V from the center position K of the link 2 with regard to the orthogonal direction V. Further, in view from the chain width direction W, the contact center point F of the first pin 3 may be arranged at a position shifted from the graphic center G of the end face 17 of the first pin 3.

Further, the first pin 3 may be loosely fitted to the rear through hole 10 of the corresponding link 2. Further, the first pin 3 may be loosely fitted to the front through hole 9 of the corresponding link 2. Further, the second pin 4 may be engaged with the respective pulleys 60 and 70.

Further, the invention is applicable to a so-to-speak block type chain including a power transmitting block fixed to a pin or the like and projected to an outer side in a chain width direction of the pin.

Further, the invention is not limited to a mode in which the groove widths of both of the drive pulley 60 and the driven pulley 70 are varied but the invention may be of a mode in which only the groove width of either one thereof is varied and other thereof is constituted by a fixed width which is not varied. Further, although an explanation has been given of a mode in which the groove width is continuously (steplessly) is varied, the invention may be applied to other power transmitting apparatus in which the groove width is varied in steps or constituted by a fixed type (nonvariable speed).

## Claims

1. A power transmitting chain comprising:
a plurality of links aligned in a chain advancing direction and a plurality of connecting members extended in a chain width direction orthogonal to the chain advancing direction for connecting, the links to each other;
wherein each of the connecting members includes a first power transmitting member and a second power transmitting member;
wherein the first power transmitting member includes an opposed portion opposed to the corresponding second power transmitting member;
wherein the opposed portion is brought into rolling and sliding contact with the corresponding second power transmitting member at a contact portion thereof displaced in accordance with varying a bending angle between the links;
wherein a locus of moving the contact portion in accordance with bending between the links forms an involute curve;
wherein an end face of the first power transmitting member is formed with a contact region brought into contact with a sheave face of a pulley and the contact region includes a contact center point; and
wherein with regard to an orthogonal direction orthogonal to the chain advancing direction and the chain width direction, a distance between the contact center point and the contact portion when the bending angle is zero and a distance between the contact center point and the contact portion when the bending angle is an allowable maximum bending angle are equal to each other.

2. The power transmitting chain according to Claim 1, wherein the contact center point is arranged at a center position of the link with regard to the orthogonal direction.

3. The power transmitting chain according to Claim 1, wherein the contact center point of the contact region of the first power transmitting member is arranged to coincide with a graphic center of the end face of the first power transmitting member in view from the chain width direction.

4. The power transmitting chain according to Claim 1, wherein the link includes a first and a second through hole arranged to be aligned in the chain advancing direction and respectively inserted with the corresponding connecting members;
wherein the first through hole is fitted with the corresponding first power transmitting member to be able to move relative to each other and press-fitted to be fixed with the corresponding second power transmitting member; and
wherein the second through hole is press-fitted to be fixed with the corresponding first power transmitting member and fitted with the corresponding second power transmitting member to be able to move relative to each other.

5. A power transmitting apparatus including a first and a second pulley respectively having pairs of sheave faces in a shape of a face of a circular cone opposed to each other and the power transmitting chain according to Claim 1, extended between the pulleys and engaged with the sheave faces for transmitting a power.
